# EUROPEAN PATENT SPECIFICATION

(11) **EP 2 439 102 B1**
(45) Date of publication and mention of the grant of the patent: **01.04.2020**
(21) Application number: 11008064.5
(22) Date of filing: 05.10.2011
(51) Int. Cl.: B60N 2/28, B60N 2/26

(54) **Child seat**
Kindersitz
Siège pour enfant

(30) Priority: 06.10.2010 JP 2010226535
(43) Date of publication of application: 11.04.2012
(73) Proprietor: Joyson Safety Systems Japan K.K., Shinagawa-ku Tokyo (JP)
(72) Inventor: Sakumoto, Masayuki, Minato-ku Tokyo 107-8508 (JP)
(74) Representative: Banzer, Hans-Jörg

(56) References cited:
- CN-U- 201 511 847
- JP-A- 2003 094 994

## Description

This application claims the benefit of Japanese Patent Application No. 2010-226535, filed on October 6, 2010.

This application relates generally to a child seat.

There is conventionally known a child seat configured such that a main body shell is held on a relatively large base closely attached to the seat surface of a vehicle via a reclining mechanism. A child seat of this type often has a support leg provided on the front end of the base. By making this support leg rise up on a vehicle body floor in a state in which the child seat is secured onto a vehicle seat, it is possible to prevent the child seat from rotating forward during the frontal collision of the vehicle or the like. Therefore, the support leg can ensure the improved safety of the child seat.

As disclosed in Unexamined Japanese Patent Application KOKAI Publication No. 2001-239868, the child seat equipped with the support leg of this type often includes a child seat supporting device. The child seat supporting device includes a long support leg having a lower end supported by the vehicle body floor and a long support arm arranged in the longitudinal direction of the child seat supporting device that corresponds to an anterior-posterior direction of the vehicle. The rear end of the support arm is coupled to the lower end of a base seat and the front end thereof is coupled to the upper end of the support leg in a collapsible manner.

According to this child seat supporting device, if the child seat is to tilt forward around a restraint point at which a child is restrained (a fixed point at which the child is fastened by a seatbelt device) by an inertial force acting on the child seated in the child seat during the sudden deceleration of the vehicle or the like, a combination of the support leg and support arm in an L shape (or in the shape of a carpenter's square) in a lateral view of the vehicle supports the front end of the child seat. For example, the load acting on the child seat during the sudden deceleration of the vehicle or the like is transmitted from the support arm to the support leg and finally received by the vehicle body floor. This can prevent the child seat from tilting forward and sinking into the seat cushion of the vehicle seat.

Meanwhile, each of the support leg and the support arm of the child seat supporting device disclosed in Unexamined Japanese Patent Application KOKAI Publication No. 2001-239868 is made of a thin plate. Furthermore, the support arm is coupled to the upper end of the support leg in a collapsible manner in a state of protruding from the front end of the base seat by a predetermined length. On the other hand, the inertial force acting on the child seat in which the child is seated during the sudden deceleration of the vehicle, the frontal collision or the like is considerably high. Due to this, the member formed by coupling together the thin plate members into the L shape (or into the shape of the carpenter's square) is possibly unable to resist the inertial force. To overcome the problem, there is developed a child seat support leg device as disclosed in, for example, Unexamined Japanese Patent Application KOKAI Publication No. 2003-94994. This child seat support leg device is configured such that a relatively high rigidity leg formed by bending a metal pipe and coupled to a horizontal member via a rotational unit supports the front surface of a base.

The extensible pipe support leg disclosed in Unexamined Japanese Patent Application KOKAI Publication No. 2003-94994 is collapsed and contained in the lower surface of a base of a child seat. Due to this, a user need to raise up the support leg by one hand while releasing a lock mechanism provided in the rotational unit of the support leg device by the other hand with the base reclined on one side and kept unmovable. It is disadvantageously difficult to smoothly perform a series of operations while holding the child seat.

Moreover, a support-leg-length adjustment mechanism is disclosed in Unexamined Japanese Patent Application KOKAI Publication No. 2003-94994. However, the mechanism is designed simply to insert an adjustment pin serving as a stopper into one of holes formed in the pipe support leg at predetermined intervals. Due to this, the support leg disclosed therein has problems that a clearance is generated between pipe parts of a double structure, rattling occurs, and abnormal noise occurs when in use.

Document JP 2003 094994 A relates to a support leg device of a child seat. The support leg device is configured so that the front part of the child seat placed on a car seat is supported by the floor surface of the car. The configuration includes a horizontal rod fixed to the undersurface of the child seat and a leg installed in the front of the horizontal rod such that it is swingable up and down and arranged so that the bottom is abutted to and supported by the floor surface of the car. When the child seat is out of service, the leg is folded up to the side with the horizontal rod and accommodated on the undersurface of the child seat.

It is an object of the present invention to provide a child seat capable of solving the problems of the conventional techniques stated above, and capable of facilitating collapsing and containing a support leg, raising up the support leg, and adjusting the length of the support leg.

A child seat according to one aspect of the present invention is a child seat **(1)** attached to a vehicle, including: a frame body **(12)** which is contained in a base **(10)** supporting a main body seating and restraining a child, which stiffens the base **(10),** and which is fixed and disposed in the base **(10)** so that a front end is exposed from a notch formed in the base **(10);** a rotational support **(20)** attached to a site exposed at the base front end **(10a)** of the frame body **(12)** to be rotatable around the frame body **(12),** and containing a lock mechanism capable of being locked and unlocked at a predetermined angle with respect to the frame body **(12);** and a support leg **(30)** including a leg support **(31)** capable of adjusting and holding a leg portion coupled to the rotational support **(20)** at a predetermined length, wherein the base **(10)** is fixed onto a vehicle seat **(4),** the support leg **(30)** is rotated around the rotational support **(20)** and adjusted to have a predetermined length at a base front end position, and the base **(10)** is stably held by abutting a bottom plate of the leg support on a vehicle body floor **(5).**

The frame body **(12)** comprises a pipe material that is processed substantially into u-shape including a front end frame **(12a)** located on the front end of the base **(10),** and a hardened frame **(12b)** connecting both sides of the front end frame **(12a)** and extending in a longitudinal direction of the base **(10).**The rotational support **(20)** is rotatably attached to the front end frame **(12a).**

The lock mechanism locks by inserting a lock pin **(26)** biased by a biaser contained in inner portion into a through-hole **(14)** formed in the frame body **(12),** and unlocks by pulling out the leg portion of the support leg **(30)** from the rotational support **(20)** by a predetermined distance against the biaser.

It is preferable that a concave portion **(11)** capable of containing a part of the leg support **(31)** with the leg portion of the support leg **(30)** pulled out is formed in a bottom surface of the base **(10).**

It is preferable that the leg support **(31)** includes a leg retaining hole **(31b),** into which the leg portion is slidably inserted, and includes a biasing and pressing member pressing the leg portion against an inner side surface of the leg retaining hole **(31)** while the leg portion is maintained at a predetermined length.

According to the present invention, it is possible to perform an operation for collapsing the support leg attached to the base of the child seat and an operation for raising up the support leg by one hand, and to easily adjust the length of the support leg according to a vehicle body floor.

A more complete understanding of this application can be obtained when the following detailed description is considered in conjunction with the following drawings, in which:
FIG. 1 is an overall perspective view illustrating a child seat according to an embodiment of the present invention in a state of being attached to a vehicle seat;
FIG. 2A is a side view illustrating the child seat according to the embodiment in a state of collapsing a support leg;
FIG. 2B is a side view illustrating the child seat according to the embodiment in a state of being attached to the vehicle seat;
FIG. 3 is a perspective view of a base of the child seat shown in FIG. 1 with the upper surface of the base partially cut out so as to show the structure of a main frame in the base;
FIG. 4 is an exploded perspective view illustrating the main frame and the rotational support of the support leg rotatably attached to the main frame in an exploded manner;
FIG. 5A illustrates the rotational support and the support leg when the support leg is raised up;
FIG. 5B illustrates the rotational support and the support leg when the support leg is collapsed;
FIG. 5C illustrates the rotational support and the support leg when the support leg is accommodated in a lower portion of the bottom of the base;
FIG. 6 is an exploded perspective view illustrating the configuration of a lock mechanism of a support-leg length adjustment unit in an exploded manner;
FIG. 7A is an enlarged cross-sectional view for describing operation performed by the lock mechanism shown in FIG. 6; and
FIG. 7B is an enlarged cross-sectional view for describing operation performed by the lock mechanism shown in FIG. 6.

A child seat according to a preferred embodiment of the present invention will be described hereinafter with reference to the accompanying drawings.

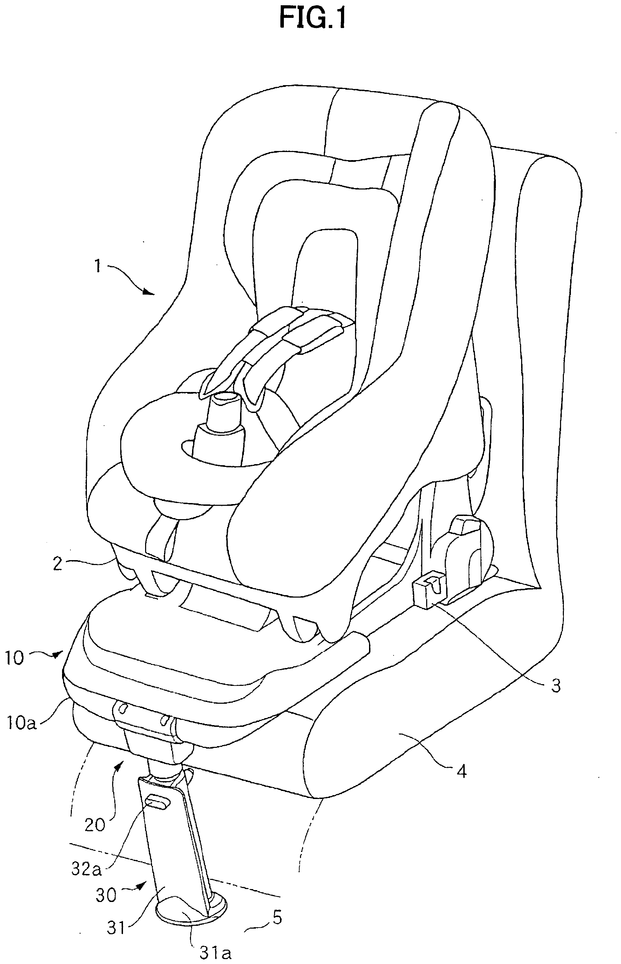

FIG. 1 is a perspective view illustrating a child seat **1** according to the embodiment of the present invention in a state of being attached to a vehicle seat (hereinafter, also simply "seat") **4** of a vehicle while facing front. In the embodiment, the child seat **1** includes a base **10** and a main body shell **2,** and the base **10** supporting the main body shell **2** is secured to the vehicle seat **4** by an anchor mechanism **3** according to the ISOFIX standard. As shown in FIG. 1, a support leg **30** attached to the lower surface of a base front end **10a** via a rotational support **20** rises up on a vehicle body floor (hereinafter, also simply "floor") **5** in front of the vehicle seat **4** and supports the base **10.** In the embodiment, a well-known detachable mechanism (not shown) integrates the main body shell **2** with the base **10.**

As shown in FIG. 1, the support leg **30** attached to the base front end **10a** includes a leg support **31** made of synthetic resin. The support leg **30** can stably rise up by abutment of a disc-like bottom plate **31a** of the leg support **31** with the surface of the vehicle body floor **5.** A push button **32a** of a button adjuster **32** (to be described later) protrudes in the upper portion of the front surface of the leg support **31.** This push button **32a** is a one-touch button that functions to adjust the length of a metal leg pipe **33,** to be described later, accommodated in the leg support **31** of the support leg **30,** to lock up the leg pipe **33** at a fixed position, and to unlock the leg pipe **33.**

The stability of the child seat **1** improves when the child seat **1** is installed by fixing the child seat **1** onto the seat **4** and raising up the support leg **30** on the floor **5.** Due to this, even if the vehicle suddenly decelerates in a state, for example, in which a child is seated in the child seat **1** and the inertial force relative to the weight including the weight of the child seat **1** and the weight of the child acts on the child seat **1,** it is possible to ensure preventing the child seat **1** from rotating forward and to secure the safety of the child seated in the child seat **1.**

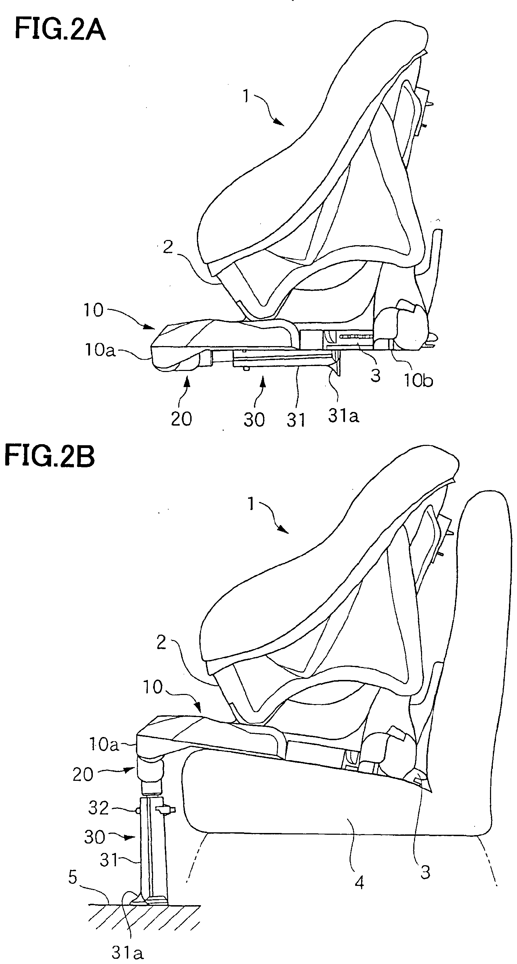

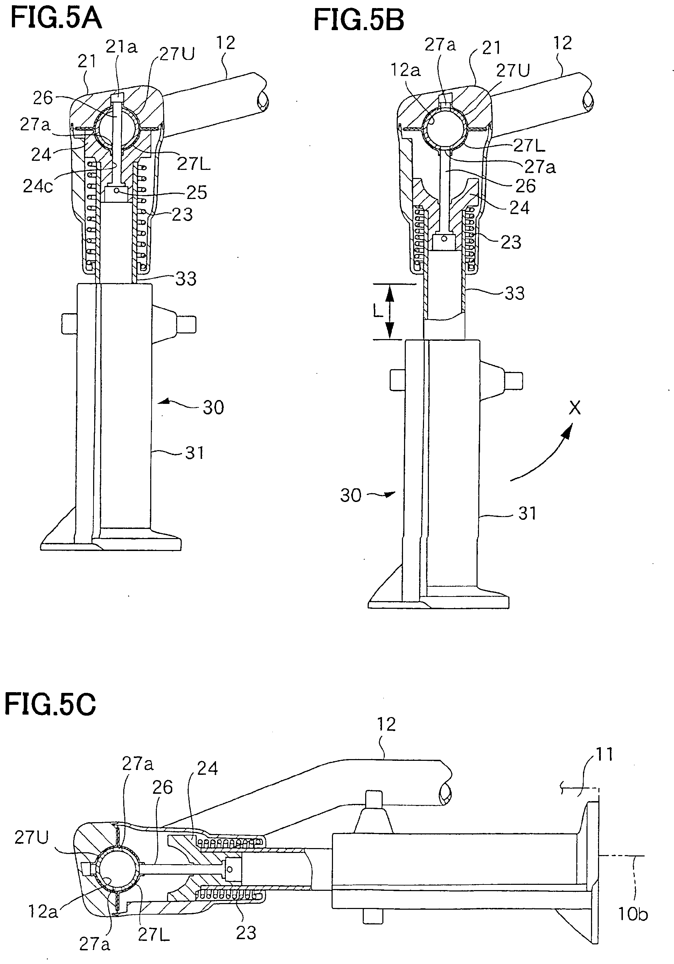

FIG. 2A is a side view illustrating only the child seat **1** shown in FIG. 1. As shown in FIG. 2A, if the child seat **1** is detached from the vehicle seat 4, then the support leg **30** is collapsed into a base bottom (hereinafter, also simply "bottom") **10b** of the base **10** at the rotational support **20** on the base front end **10a** and accommodated in the lower portion of the base bottom **10b.** A concave portion **11** (see FIG. 5C) that can accommodate a part of a back surface of the leg support **31** is formed in the bottom **10b** of the base **10** made of synthetic resin. A part of the back surface of the leg support **31** is accommodated in the concave portion **11.** At this time, as shown in FIG. 2A, a part of the front surface of the leg support **31** protrudes from the base bottom **10b.** Accordingly, in a state in which the front surface of the leg support **31** protrudes from the base bottom **10b,** a user cannot closely attach the base **10** of the child seat **1** onto the vehicle seat **4** differently from a state shown in FIG. 2B. Due to this, the user always needs to use the child seat **1** with the support leg **30** raised up and supported on the vehicle floor **5.** Specifically, the child seat **1** according to the embodiment exhibits a secondary effect that the utilization rate of the support leg **30** can enhance.

FIG. 2B is a side view of the child seat **1** in the same state as that shown in FIG. 1. As shown in FIG. 2B, a portion of the front end **10a** of the base **10** protruding from the front end of the vehicle seat **4** is slightly bent. The upper end of the support leg **30** is coupled to the front end **10a** of the base **10** via the rotational support **20.** By configuring the base **10** into such a shape, it is possible to secure a wide space at the feet of the seated child.

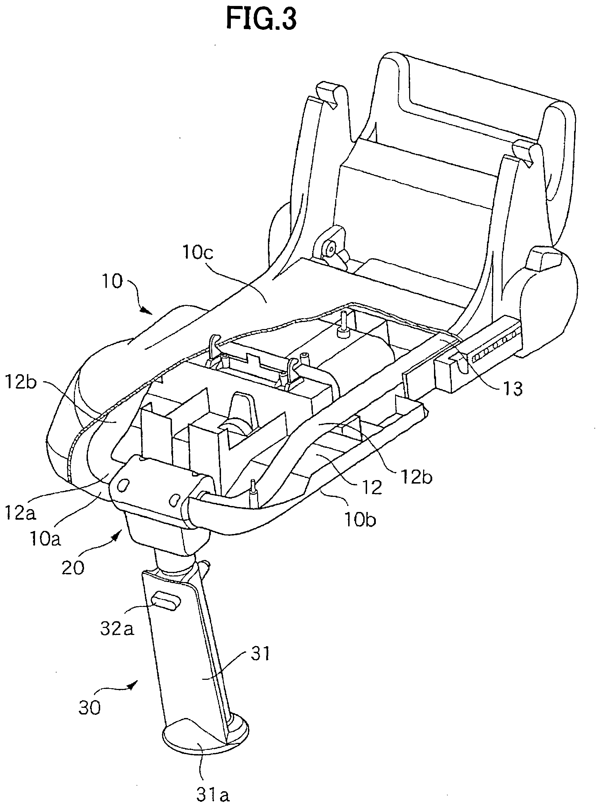

FIG. 3 is a perspective view illustrating the base **10** with an upper surface **10c** of the base **10** partially cut out so as to show the internal structure of the base **10** in a state of detaching the main body shell **2** of the child seat **1.** As shown in FIG. 3, a main frame **12** made of a metal pipe worked into a generally U shape in a plan view is provided in the base **10** along the longitudinal direction (an anterior-posterior direction) of the base **10.** The main frame **12** is fixed in the base **10** by a fixing screw (not shown) and a frame holder **13** formed as a part of the base **10.** Furthermore, the rotational support **20** is attached to a front end frame **12a** of this main frame **12.** The rotational support **20** includes a lock mechanism (the configuration of which will be described later) inside for locking and unlocking the leg pipe **33** when the support leg **30** rises up.

The main frame **12** is made of a pipe and formed by integrally bending the front end frame **12a** and stiffening frames **12b** continuous to both sides of the front end frame **12a** and extending in the longitudinal direction of the base **10.** Due to this, by fixedly holding the main frame **12** in the entire interior of the base **10,** it is possible to secure the rigidity of the entire base **10.** It is also possible to ensure that the entire child seat **1** is prevented from rotating forward via the support leg **30.** Moreover, by attaching the rotational support **20** to a notch region of the base front end **10a,** the base front end **10a** has no protruding region. This can prevent the seated child from hitting his/her feet against such a protruding region.

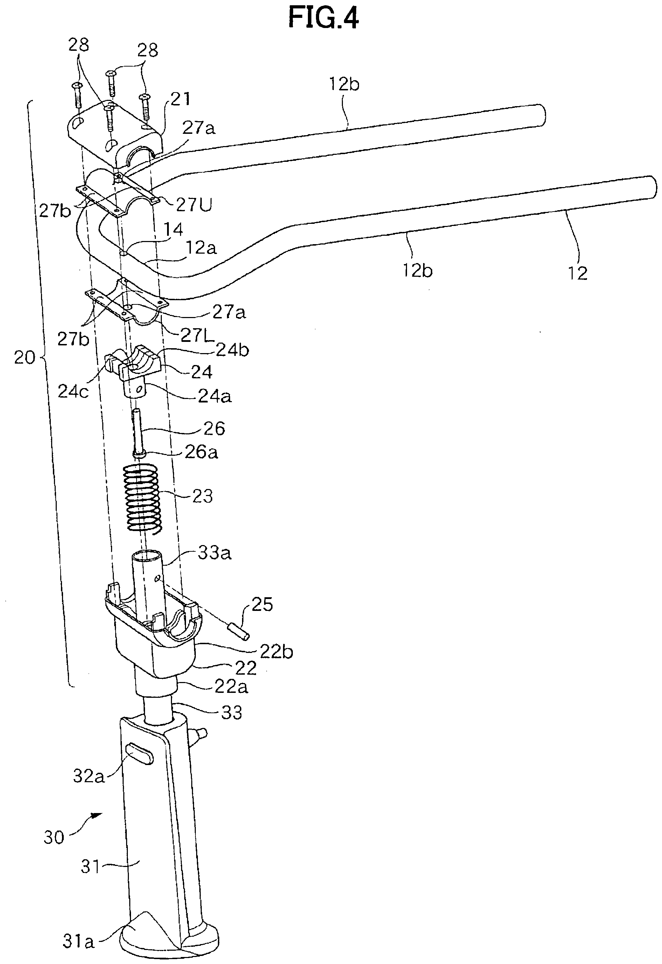

The configuration of the rotational support 20 coupled to the front end frame **12a** of the main frame **12** will now be described with reference to FIGS. 4 and 5A.

FIG. 5A is a cross-sectional view illustrating the configuration of the rotational support **20** provided on the upper end of the leg pipe **33** held by the leg support **31.** Constituent elements of the rotational support **31** and the relation among the constituent elements will be described with reference to the exploded perspective view of FIG. 4.

As shown in FIG. 4, the constituent elements of the rotational support **20** are accommodated in an upper cover **21** and a lower cover **22** vertically separated and each made of a resin molded member. The lower cover **22** is the resin molded member obtained by integrally forming a guide pipe **22a,** into which the leg pipe **33** held by the leg support **31** is inserted, with a rotational-member accommodation unit **22b** located in the upper portion of the guide pipe **22a.** The lower cover **22** accommodates therein a lock spring **23** externally fitted onto the leg pipe **33** and a pipe end holder **24** having a shaft **24a** inserted into the upper end of the leg pipe **33.** The shaft **24a** of this pipe end holder **24** is fixed to the upper end of the leg pipe **33** by a steady pin **25.** A lock pin **26** is inserted into a pin storage hole **24c** formed in the pipe end holder **24** from below. The lock pin **26** is held by the pipe end holder **24** through a lower end flange **26a** and the steady pin **25.**

The pipe end holder **24** is a resin molded member obtained by integrally forming the shaft **24a** fixedly inserted into the leg pipe **33** and a frame holding plate support **24b.** A frame holding plate **27** is a metal workpiece bent into a semicylindrical shape so as to have an inside diameter portion that can be closely attached to the main frame **12.** Joint flanges **27b** are formed on both ends of the frame holding plate **27.** As shown in FIG. 4, the frame holding plate **27** is configured so that an upper plate **27U** and a lower plate **27L** that are equally semicircular face each other to grasp and hold the front end frame **12a** of the main frame **12.** A lock pin holding hole (hereinafter, also simply "hole") **27a** through which the lock pin **26** slidably passes is formed at a central position of each of the semicircular upper and lower plates **27U** and **27L.** This lock pin holding hole **27a** is subjected to curling in the direction of an outer surface so as to be able to guide the lock pin **26** sliding in this lock holding hole **27a** and to hold the position of the lock pin **26.**

These constituent elements of the rotational support **20** are attached to the lower cover **22** and the leg pipe **33** and covered with the upper cover **21** from above so as to cover up the entire constituent elements. The upper cover **21** and the lower cover **22** are coupled by joint bolts **28,** thereby constituting the rotational support **20.**

Operation performed by the support leg **30** and the rotational support **20** when the support leg **30** is raised up or collapsed will be described with reference to FIGS. 5A to 5C. FIG. 5A illustrates the rotational support **20** and the support leg **30** when the support leg **30** is raised up. In this upright state, the biasing force of the lock spring **23** accommodated in the rotational support **20** presses the pipe end holder **24** against the lower surface of the lower plate **27L.** At this time, the lock pin **26** held by the pipe end holder **24** passes through a through-hole **14** (see FIG. 4) formed in the front end frame **12a.** Furthermore, the upper end of the lock pin **26** passes through the lock pin holding hole **27a** of the upper plate **27U** and protrudes into a concave portion **21a** formed in the upper cover **21.** Accordingly, the leg pipe **33** and the main frame **12** are locked together in a state in which the lock pin **26** integrated with the leg pipe **33** passes through the through-hole **14** of the main frame **12.** Due to this, this ensures that the support leg **30** is held in the upright state as shown in FIG. 5A.

To collapse the support leg **30** of the child seat **1** detached from the vehicle seat **4,** the user pulls out the leg pipe **33** against the spring force of the lock spring **23** within the support leg **30** while grasping the leg support **31** of the leg pipe **33** as shown in FIG. 5B. Specifically, when the user pulls the leg pipe **33** by a length **L** at which the lock spring **23** is fully compressed, the lock pin **26** integrated with the pipe end holder **24** is pulled out from the through-hole **14** (see FIG. 4) of the main frame **12.** At this time, the locked state between the main frame **12** and the leg pipe **33** is released. Due to this, with the tip end of the lock pin **26** held by the curled portion of the lower plate **27L** and abutting on the outer circumference of the front end frame **12a,** the user can rotate the support leg **30** so as to collapse the support leg **30** in a collapsible direction (an X direction in FIG. 5B) .

Furthermore, the support leg **30** is rotated up to the base bottom **10b** of the child seat 1 and, as shown in FIG. 5C, the leg support **31** is fitted into the concave portion **11** formed in the base bottom **10b,** thereby accommodating the support leg **30** in the lower portion of the base bottom **10b.**

On the other hand, to raise up the support leg **30,** the user pulls out the leg support **31** fitted into the concave portion **11** of the base bottom **10b** and rotates the support leg **30** in an upright direction in this state. When the support leg **30** is at an angle shown in FIG. 5A, the lock pin **26** biased by the lock spring **23** is inserted into the through-hole **14** of the front end frame **12a** and the tip end of the lock pin **26** protrudes from the hole **27a** of the upper plate **27U.** The support leg **30** is thereby held upright.

In this way, if the user is to collapse the support leg **30,** the user suffices to pull out the leg pipe **33** by as much as the predetermined amount and to rotate the leg pipe **33** while grasping the leg support **31.** On the other hand, if the user is to raise up the support leg **30,** the user pulls out the leg support **31** from within the concave portion **11** of the base bottom **10b** and rotates the leg support **31** until the support leg **30** turns upright. By doing so, the lock pin **26** acts to automatically lock the support leg **30.** In this way, the user can easily collapse the support leg **30** only by pulling out and rotating the leg support **31** of the support leg **30** by one hand while supporting the main body of the child seat **1** by the other hand. Furthermore, the user can make the support leg **30** upright only by pulling out the leg support **31** that is accommodated in the concave portion **11** and rotating the leg support **31** so as to raise up the support leg **30.**

### Length Adjustment Mechanism of Leg Support of Support Leg

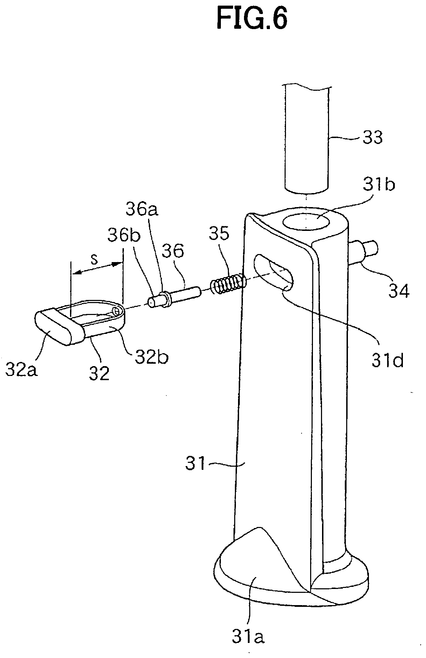

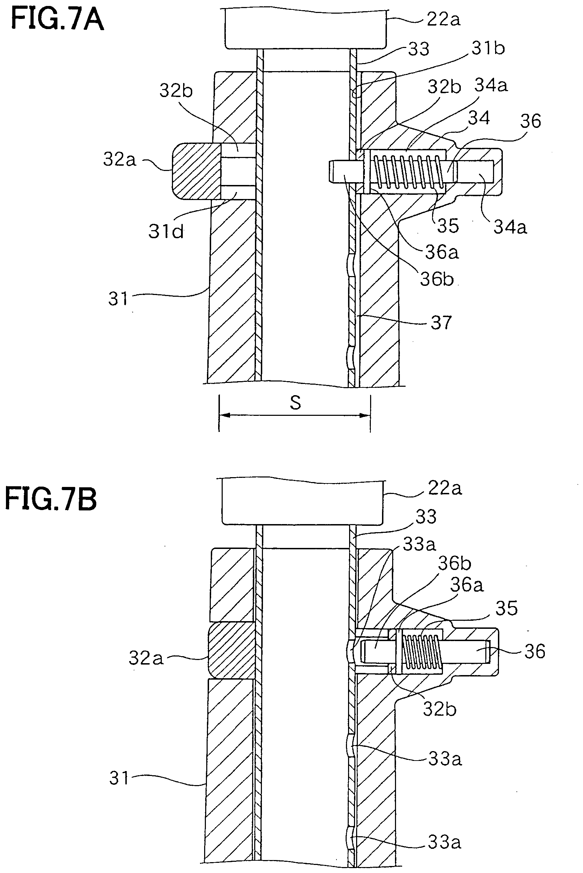

The configuration of a length adjustment mechanism for the leg pipe **33** incorporated in the leg support **31** of the support leg **30** will now be described with reference to FIGS. 6, 7A, and 7B.

As stated, the leg support **31** of the support leg **30** is a synthetic resin molded member having the disc-like bottom plate **31a** abutting on the floor **5** so as to accommodate and hold the second half of the leg pipe **33** and to surely support the support leg **30.** A protrusion **34** that can accommodate a stopper pin **36** and an biasing spring **35** shown in FIG. 6 and an accommodation space **34a** that can accommodate the button adjuster **32** are formed within the upper end of this leg support **31** (see FIG. 7A). Moreover, a plurality of height holding holes **33a** is formed at predetermined positions on the outer circumference of the leg pipe **33** over an appropriate range at predetermined intervals in a height direction (see FIGS. 7A and 7B).

As shown in FIG. 6, the button adjuster **32** is configured to include a ring body **32b** functioning as an biasing and pressing member and the push button **32a** actuated against the biasing force of the biasing spring **35.** The ring body **32b** has a long side **S** almost equal to the length that is the sum of the diameter of the leg pipe **33** and a length by which the push button **32a** is pushed, and is formed into a generally D shape in a plan view. The stopper pin **36** includes a shaft having a diameter smaller than the inside diameter of the biasing spring **35** and a collar **36a** holding one end of the biasing spring **35.** The stopper pin **36** can position the leg pipe **33** by user's actuating the button adjuster **32** to insert a tip end **36b** of the stopper pin **36** into one of the height holding holes **33a.**

If these components are to be assembled together, the biasing spring **35** is accommodated first in the accommodation space **34a** of the protrusion **34.** Next, the stopper pin **36** having the diameter smaller than the inside diameter of the biasing spring **35** is inserted into the biasing spring **35** so that the collar **36a** of the stopper pin **36** contacts the biasing spring **35.** After accommodating the biasing spring **35** and the stopper pin **36** in the accommodation space **34a,** the button adjuster **32** is inserted into a lateral opening **31d** of the leg support **31** so that the push button **32a** faces front. Thereafter, the leg pipe **33** is inserted from above into a leg retaining hole **31b.**

FIG. 7A is a side view illustrating the length adjustment mechanism when the leg pipe **33** is fixed. As shown in FIG. 7A, the height of the leg pipe **33** is defined by inserting the tip end **36b** of the stopper pin **36** into one of the height holding holes **33a** of the leg pipe **33** by the biasing force of the biasing spring **35** accommodated in the accommodation space **34a** of the protrusion **34** of the leg support **31.** Furthermore, the collar **36a** of the stopper pin **36** presses the ring body **32b** of the button adjuster **32** toward the stopper **33** to press the leg pipe **33** into one side of the interior of the leg retaining hole **31b** of the leg support **31.** The leg pipe **33** is thereby pressed in one direction along the long side **S** of the ring body **32b** in the leg retaining hole **31b.** Due to this, no clearance (play) is generated between the leg pipe **33** and the leg holding hold **31b,** which can eliminate rattling of the leg pipe **33.**

To adjust the height of the leg pipe **33** while the leg pipe **33** is fixed as shown in FIG. 7A, the user suffices to push the push button **32a** of the button adjuster **32** to force out the tip end **36b** of the stopper pin **36** from the height holding hole **33a** of the leg pipe **33.** The leg pipe **33** can thereby freely slide in the height direction. If the user adjusts the height of leg pipe **33** so that the bottom plate **31a** of the leg support **31** can abut on the vehicle body floor **5** and the stopper pin **36** is inserted into another height holding hole **33a,** the stopper pin **36** acts to lock the leg pipe **33.** Due to this, the user suffices to confirm whether the leg pipe **33** is locked and to set the support leg **30.**

The present invention has been described, taking the child seat **1** configured so that the main body shell **2** is separable from the base **10** as an example. Needless to say, even a child seat configured so that a base is integral with the bottom of a main body shell can exhibit the same effects as those of the child seat **1** according to the embodiment by attaching a support leg to the front end of the base via the above-stated rotational support.

Specifically, the present invention is not limited to the above-stated embodiment and it should be apparent that the preferred embodiment may be modified in arrangement and detail without departing from the principles disclosed herein and that it is intended that the application be construed as including all such modifications and variations insofar as they come within the scope of the appended claims.

## Claims

1. A child seat **(1)** attached to a vehicle, comprising:
a frame body **(12)** which is contained in a base **(10)** supporting a main body seating and restraining a child, which stiffens the base **(10),** and which is fixed and disposed in the base **(10)** so that a front end is exposed from a notch formed in the base **(10);**
a rotational support **(20)** attached to a site exposed at the base front end **(10a)** of the frame body **(12)** to be rotatable around the frame body **(12),** and containing a lock mechanism capable of being locked and unlocked at a predetermined angle with respect to the frame body (12); and
a support leg **(30)** including a leg support **(31)** capable of adjusting and holding a leg portion coupled to the rotational support **(20)** at a predetermined length,
wherein the base **(10)** is fixed onto a vehicle seat **(4),** the support leg **(30)** is rotated around the rotational support **(20)** and adjusted to have a predetermined length at a base front end position, and the base **(10)** is stably held by abutting a bottom plate of the leg support on a vehicle body floor **(5),**
wherein the frame body **(12)** comprises a pipe material that is processed substantially into u-shape including a front end frame **(12a)** located on the front end of the base **(10),** and a hardened frame **(12b)** connecting both sides of the front end frame **(12a)** and extending in a longitudinal direction of the base **(10),** and the rotational support **(20)** is rotatably attached to the front end frame **(12a),**
**characterized in that**
the lock mechanism locks by inserting a lock pin **(26)** biased by a biaser contained in inner portion into a through-hole **(14)** formed in the frame body **(12),** and unlocks by pulling out the leg portion of the support leg **(30)** from the rotational support **(20)** by a predetermined distance against the biaser.

2. The child seat **(1)** according to claim 1, **characterized in that**
a concave portion **(11)** capable of containing a part of the leg support **(31)** with the leg portion of the support leg **(30)** pulled out is formed in a bottom surface of the base **(10).**

3. The child seat **(1)** according to claim 1 or claim 2, **characterized in that**
the leg support **(31)** includes a leg retaining hole **(31b),** into which the leg portion is slidably inserted, and includes a biasing and pressing member pressing the leg portion against an inner side surface of the leg retaining hole **(31)** while the leg portion is maintained at a predetermined length.

## Patentansprüche

1. Kindersitz (1), welcher an einem Fahrzeug angebracht ist, umfassend:
einen Gestellkörper (12), welcher in einer Basis (10), welche eine Hauptkörperauflagefläche hält und ein Kind zurückhält, enthalten ist, welcher die Basis (10) versteift, und welcher in der Basis (10) derart befestigt und angebracht ist, dass ein vorderes Ende von einer in der Basis (10) ausgebildeten Einbuchtung freigelegt wird;
eine Drehhalterung (20), welche an einem an dem Basisvorderende (10a) des Gestellkörpers (12) freigelegten Ort angebracht ist, um drehbar um den Gestellkörper (12) zu sein, und einen Verriegelungsmechanismus enthält, welcher ausgestaltet ist, in einem vorbestimmten Winkel bezogen auf den Gestellkörper (12) verriegelt und entriegelt zu werden; und
ein Haltebein (30), welches eine Beinhalterung (31) aufweist, welche ausgestaltet ist, einen Beinabschnitt, welcher mit der Drehhalterung (20) gekoppelt ist, auf eine vorbestimmte Länge einzustellen und zu halten,
wobei die Basis (10) auf einem Fahrzeugsitz (4) befestigt ist, wobei das Haltebein (30) um die Drehhalterung (20) gedreht ist und eingestellt ist, eine vorbestimmte Länge bei einer Basisvorderendenposition aufzuweisen, und die Basis (10) durch Anstoßen einer Bodenplatte der Beinhalterung an einem Fahrzeugkarosserieboden (5) stabil gehalten wird,
wobei der Gestellkörper (12) ein Rohrmaterial umfasst, welches im Wesentlichen in einer U-Form gearbeitet ist, welche ein vorderes Endgestell (12a), welches an dem vorderen Ende der Basis (10) angeordnet ist, und ein gehärtetes Gestell (12b), welches beide Seiten des vorderen Endgestells (12a) verbindet und sich in einer Längsrichtung der Basis (10) erstreckt, aufweist, und die Drehhalterung (20) drehbar an dem vorderen Endgestell (12a) angebracht ist,
**dadurch gekennzeichnet, dass**
der Verriegelungsmechanismus durch Einsetzen eines Verriegelungsstifts (26), welcher von einer in einem inneren Abschnitt enthaltenen Vorspannvorrichtung vorgespannt ist, in ein Durchgangsloch (14), welches in dem Gestellkörper (12) ausgebildet ist, verriegelt und durch Herausziehen des Beinabschnitts des Haltebeins (30) aus der Drehhalterung (20) um eine vorbestimmte Entfernung gegenüber der Vorspannvorrichtung entriegelt.

2. Kindersitz (1) nach Anspruch 1, **dadurch gekennzeichnet, dass**
ein konkaver Abschnitt (11), welcher ausgestaltet ist, einen Teil der Beinhalterung (31) mit dem herausgezogenen Beinabschnitt des Haltebeins (30) aufzunehmen, in einer Bodenfläche der Basis (10) ausgebildet ist.

3. Kindersitz (1) nach Anspruch 1 oder Anspruch 2, **dadurch gekennzeichnet, dass**
die Beinhalterung (31) ein Beinzurückhalteloch (31b) aufweist, in welches der Beinabschnitt verschiebbar eingesetzt ist, und ein Vorspann- und Drückelement aufweist, welches den Beinabschnitt gegen eine Innenseitenfläche des Beinzurückhaltelochs (31) presst, während der Beinabschnitt in einer vorbestimmten Länge gehalten wird.

## Revendications

1. Un siège pour enfant (1), fixé à un véhicule, comprenant :
- un corps de châssis (12) soutenant un corps principal de siège d'enfant en retenant l'enfant, qui rigidifie la base (10), et qui est fixé à la base (10) et disposé dans celle-ci de sorte qu'une extrémité avant soit exposée depuis une encoche formée dans la base (10) ;
- un support rotatif (20) attaché à un site exposé au niveau de l'extrémité avant de la base (10a) du corps de châssis (12), pour pouvoir tourner autour du corps de châssis (12), et contenant un mécanisme de verrouillage capable d'être verrouillé et déverrouillé à un angle prédéterminé par rapport au corps de châssis (12) ; et
- une jambe de support (30) comprenant un support de jambe (31) capable d'ajuster et de maintenir une partie de jambe couplée au support rotatif (20) à une longueur prédéterminée,
- dans lequel la base (10) est fixée sur un siège de véhicule (4), la jambe de support (30) étant tournée autour du support de rotation (20) et ajustée pour avoir une longueur prédéterminée dans une position d'extrémité avant de la base, et la base (10) est maintenue de manière stable par about contre une plaque inférieure du support de jambe sur une plancher de carrosserie de véhicule (5),
- dans lequel le corps de châssis (12) comprend un matériau de tuyau qui est traité sensiblement en forme de U comprenant un cadre d'extrémité avant (12a) situé au niveau de l'extrémité avant de la base (10), et un cadre durci (12b) reliant les deux côtés du cadre d'extrémité avant (12a) et s'étendant dans une direction longitudinale de la base (10), et le support rotatif (20) est fixé en rotation au cadre d'extrémité avant (12a),
**caractérisé en ce que**
- le mécanisme de verrouillage se verrouille en insérant une goupille de verrouillage (26) sollicitée par un dispositif de sollicitation contenu dans la partie intérieure dans un trou traversant (14) formé dans le corps de châssis (12), et se déverrouille en tirant la partie de jambe de la jambe de support (30) du support de rotation (20) d'une distance prédéterminée à l'encontre du dispositif de sollicitation.

2. Le siège pour enfant (1) selon la revendication 1, **caractérisé en ce que**
une partie concave (11) apte à contenir une partie du support de jambe (31) avec la partie de jambe de la jambe de support (30) tirée vers l'extérieur est formée dans une surface inférieure de la base (10).

3. Le siège pour enfant (1) selon la revendication 1 ou la revendication 2, **caractérisé en ce que**
le support de jambe (31) comprend un trou de retenue de jambe (31b), dans lequel la partie de jambe est insérée de manière coulissante, et comprend un élément de sollicitation et de pression pour presser la portion de jambe contre une surface latérale intérieure du trou de retenue de jambe (31) tandis que la portion de jambe est maintenue à une longueur prédéterminée.
